**Europäisches Patentamt**

**European Patent Office**

**Office européen des brevets**

(19)

(11) Veröffentlichungsnummer : **0 095 007**
**B1**

(12) **EUROPÄISCHE PATENTSCHRIFT**

(45) Veröffentlichungstag der Patentschrift :
03.12.86

(51) Int. Cl.⁴ : **B 60 C 11/16**

(21) Anmeldenummer : **82710031.4**

(22) Anmeldetag : **21.05.82**

(54) Gleitschutzelement für Kraftfahrzeugreifen.

(43) Veröffentlichungstag der Anmeldung :
**30.11.83 Patentblatt 83/48**

(45) Bekanntmachung des Hinweises auf die Patenterteilung : **03.12.86 Patentblatt 86/49**

(84) Benannte Vertragsstaaten :
**AT BE CH DE FR GB IT LI LU NL SE**

(56) Entgegenhaltungen :
**DE-A- 2 204 074**
**DE-A- 2 304 036**
**DE-A- 2 337 587**
**FR-A- 2 176 876**
**FR-A- 2 207 813**
**FR-A- 2 207 814**

(73) Patentinhaber : **STAHLGRUBER Otto Gruber GmbH &**
**Co.**
**Einsteinstrasse 130**
**D-8000 München 80 (DE)**

(72) Erfinder : **Gottauf, Georg**
**Elektrastrasse 56**
**D-8000 München 81 (DE)**
Erfinder : **Cantz, Rolf**
**Buchenweg 13**
**D-7230 Schramberg-Sulgen (DE)**

(74) Vertreter : **Huss, Carl-Hans, Dipl.-Ing.**
**Patentanwalt Griesstrasse 3 a Postfach 14 54**
**D-8100 Garmisch-Partenkirchen (DE)**

**Beschreibung**

Obwohl in Kraftfahrzeugreifen eingesetzte, im folgenden « Spikes » genannte Gleitschutzelemente die Verkehrssicherheit auf winterglatten Fahrbahnen erheblich erhöhen, wird der gegenüber normalen Reifen etwas niedrigere Reibungsbeiwert auf trockener und nasser Fahrbahn sowie die durch die Spikesreifen verursachten Oberflächenschäden an den Straßendecken als Nachteil angesehen. Diese Straßenschäden haben in vielen Ländern zu Einschränkungen oder sogar zum Verbot der Spikesreifen geführt.

Die Industrie bemüht sich schon längere Zeit, diese Nachteile zu verringern. Es ist heute bekannt, daß der Fahrbahnverschleiß hauptsächlich von zwei Faktoren bestimmt wird, nämlich :

a) der statischen Kraft, die zum Eindrücken des Spike erforderlich ist und

b) der dynamischen Kraft, die insbesondere bei höheren Geschwindigkeiten zwischen Spike und Fahrbahn wirksam wird.

Die statische Kraft ist abhängig von der Untergummistärke, d. h. von dem Abstand des Spikekopfes von der steifen Karkasse, den Federungseigenschaften des Untergummis sowie insbesondere von der Größe des Spikekopfes. Um die statische Kraft zu minimieren hat man in den letzten Jahren die Untergummistärke erhöht, d. h. in der Regel kürzere Spikes verwendet und außerdem den Spikekopf-Durchmesser verkleinert. Man hat hier jedoch Grenzwerte erreicht, die gerade noch den notwendigen Halt des Spikes im Profilgummi gewährleisten.

Die dynamische Kraft zwischen Spike und Fahrbahn wird durch die Fahrzeuggeschwindigkeit und die Spikemasse bestimmt. Durch Verringerung des Spikegewichts wurden auch hier in den vergangenen Jahren entscheidende Verbesserungen erreicht. Die wesentliche Gewichtsverringerung wurde dabei durch geringere Abmessungen des Spike, aber auch mit einer Kunststoffummantelung erzielt.

Verschleißversuche von Forschungsinstituten haben bewiesen, daß der Straßenverschleiß durch diese konstruktiven Maßnahmen erheblich verringert werden konnte.

Eine weitere Entwicklung im Hinblick auf die Schonung der Straßenoberfläche führte zu einem gefederten Spike, wie er in der DE-A-2 217 111 beschrieben ist. Dabei wurden bereits beide den Straßenverschleiß bestimmende Faktoren berücksichtigt, denn einmal ist durch die Verwendung eines Federelementes die Andrückkraft auf der Fahrbahn, also die statische Kraft, verkleinert, zum anderen ist die Masse des beweglichen Teiles, nämlich des Hartmetallkerns im Vergleich zum gesamten Spike sehr niedrig, und nachdem nur dieser durch das Federelement und die Fliehkraft in die Fahrbahndecke eingedrückt wird, die dynamische Kraft entsprechend klein.

Trotz dieser Vorteile wies der Spike gemäß der genannten Druckschrift einen so wesentlichen Nachteil auf, daß er sich nicht in der Praxis durchsetzen konnte. Sämtliche für die Ummantelung und Führung des Hartmetallstiftes in Erwägung gezogenen Werkstoffe wurden nämlich durch die dauernde Bewegung des äußerst verschleißfesten Hartmetallstiftes sehr schnell verschlissen, was abrasiver Straßenschmutz noch beschleunigte. Dies hatte zur Folge, daß der Hartmetallstift nicht mehr senkrecht zur Lauffläche des Reifens geführt wurde, sondern in der dann ausgeweiteten Führung seitlich ausweichen konnte. Dies wiederum beschleunigte die Ausweitung des als Führung für den Hartmetallstift dienenden Loches weiter und führte schließlich dazu, daß entweder der gesamte Spike in seinem Loch im Reifen beim Auftreffen auf die Straßendecke schräggestellt wurde, bis sein Sitz im Reifen so ausgeweitet war, daß er infolge der Zentrifugalkraft herausflog oder bis der Hartmetallstift seine Führung so weit ausgeweitet hatte, daß er herausfiel.

Der Versuch, auch für die Ummantelung Hartmetall zu verwenden, beseitigte zwar dieses Verschleißproblem, brachte jedoch zwangsläufig den Nachteil mit sich, daß die Spikehülse nun auch gegenüber der Fahrbahn äußerst verschleißfest war und nach einer gewissen Laufstrecke ebenfalls einen Überstand über den umgebenden Profilgummi bekam, wodurch der durch die Federung des Stiftes erzielbare Effekt zunichte gemacht wurde. Darüberhinaus hatte die Hartmetallummantelung wieder eine Gewichtserhöhung zur Folge und damit eine erhebliche Vergrößerung der dynamischen Kraft.

Die DE-A-2 337 587 entspricht den Oberbegriffen der Ansprüche 1 und 7 und beschreibt auch einen abgefederten Spike mit einer Kunststoffummantelung, in die für die Führung eines aus Metall bestehenden Stiftes eine ebenfalls aus Kunststoff bestehende Gleithülse eingesetzt ist, die in ihrer Führung für den Stift auch die Gummifeder aufnimmt. Nebenbei wird ein Werkstoffaustausch vorgeschlagen, also die Umhüllung aus Metall und den Stift aus Kunststoff zu fertigen. Nach allen Erfahrungen der Praxis muß aber der in erster Linie den beim Fahren ständigen Druck- und Biegebeanspruchungen ausgesetzte, bestimmungsgemäß eine Verkrallungswirkung ausübende Stift aus Hartmetall bestehen. Falls jedoch auch bei dieser Lösung der Stift aus Hartmetall besteht, treten alle vorstehend mit Bezug auf die DE-A-2 217 111 aufgeführten Nachteile ein.

Der Erfindung lag nun die Aufgabe zugrunde, einen Spike mit gefedertem Hartmetallstift zu entwickeln, bei dem die Bewegung des Hartmetallstiftes keine die Funktion beeinträchtigende Erweiterung seiner Führung in der Ummantelung zur Folge hat, diese Ummantelung sich aber trotzdem etwa gleich schnell wie die Lauffläche des Reifens abnutzt, also nicht über die Laufflächenoberfläche übersteht.

Diese Aufgabe löst die Erfindung bei einem

Spike für Kraftfahrzeugreifen mit einem Hartmetallstift, der in einem Zentralloch einer Ummantelung gegen die Wirkung eines elastischen Federelements axial verschiebbar ist, wobei der Hartmetallstift und die Ummantelung aus unterschiedlichem Material bestehen und die Ummantelung im Zentralloch eine Führung aufweist dadurch, daß die Führung für den Hartmetallstift aus einer Legierung mit hohem Gehalt eines Hartstoffcarbids, z. B. Titancarbid, mit großer Verschleißfestigkeit gegenüber gleitender Reibung, aber geringer Widerstandsfestigkeit gegenüber schlagender Beanspruchung besteht.

Im Rahmen dieses Gedankens mögliche weitere Ausgestaltungen der Erfindung sind in den Unteransprüchen definiert.

Die Erfindung ist im folgenden unter Bezugnahme auf zwei in der Zeichnung dargestellte Ausführungsbeispiele näher beschrieben. Es stellen dar :

Figur 1 einen Längsschnitt durch ein Gleitschutzelement ;

Figuren 2 und 3 der Fig. 1 entsprechende Längsschnitte durch abgewandelte Ausführungsformen ;

Figur 4 einen Querschnitt entlang der Linie IV-IV in Fig. 2 ;

Figur 5 einen Querschnitt entlang der Linie V-V in Fig. 1 durch eine abgewandelte Ausführungsform.

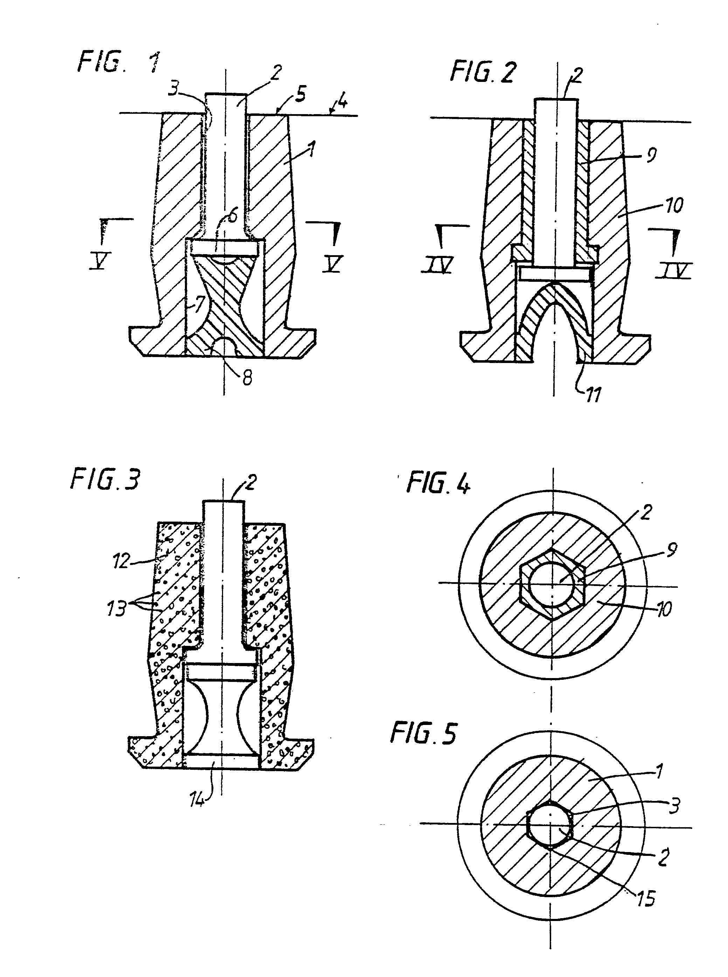

Der in Fig. 1 dargestellte Spike besteht aus einer Umhüllung 1, die den Spikekörper bildet. Der Werkstoff dieser Umhüllung ist eine Legierung aus Titancarbid und Bindemetallen wie Nickel, Kobalt oder Eisen, deren Schmelzpunkt erheblich niedriger liegt als der des Carbids, wobei das Carbid und die Metalle in Pulverform gemischt und zu der Legierung zusammengesintert werden. Eine erprobte derartige Legierung besteht beispielsweise aus 85 % TiC, 13 % Ni und 2 % Co.

Eine solche Legierung ist äußerst verschleißfest gegenüber gleitender Reibung, wie sie durch die federnde Bewegung des Hartmetallstiftes 2 in dem als Führung dienenden Zentralloch 3 auftritt, sie hat jedoch keine hohe Verschleißfestigkeit bei schlagartiger Beanspruchung, die dann auftritt, wenn sich die Lauffläche 4 des Reifens abnutzt und dadurch ein geringfügiger Überstand der Stirnfläche 5 des Spikes entsteht, die beim Abrollen auf der Straßenoberfläche aufschlägt. Dabei werden die sehr harten Carbidkörner aus dem weichen Bindematerial herausgeschlagen und das Bindematerial verschlissen, so daß in der Praxis die Stirnfläche 5 der Abnützung der Reifenlauffläche 4 folgt.

Um ein Herausfallen des Hartmetallstiftes 2 aus dem Zentralloch zu verhindern, kann dieser an seiner Unterseite mit einem Flansch 6 versehen sein. Diesem Flansch entspricht eine zylindrische Ausnehmung 7 in der Umhüllung 1, die auch ein elastisches Federelement 8 aufnimmt, das vorzugsweise aus einem hochelastischen Polymer auf Gummibasis besteht.

Hierbei eröffnet sich eine weitere Möglichkeit der Fahrbahnschonung, wenn man nämlich für das Federelement ein thermoelastisches Polymer verwendet, das bei niederen Temperaturen etwa in der Nähe des Gefrierpunktes, wenn also das Auftreten von Eis auf der Fahrbahn zu befürchten ist, härter wird und weniger elastisch reagiert, während es bei höheren Temperaturen weicher reagiert und somit die statische Kraft, mit der der Hartmetallstift 2 auf die Fahrbahn gepresst wird, vermindert. Diese höheren Temperaturen entstehen in der Reifenlauffläche bei höheren Geschwindigkeiten, wie sie auf trockener und schnee- und eisfreier Fahrbahn gefahren werden, während bei langsamer Geschwindigkeit auf schnee- und eisglatter Fahrbahn die Temperatur niedrig ist und die statische Kraft durch die Verhärtung des Federelementes 4 vergrößert wird.

Bei der abgewandelten Ausführungsform nach Fig. 2 besteht nicht die gesamte Umhüllung aus der beschriebenen Legierung, sondern nur eine als Führung für den Hartmetallstift 2 dienende Hülse 9, die in einen die Umhüllung vervollständigenden Formkörper 10 eingesetzt ist, der aus einem temperaturresistenten Kunststoff, z. B. einem Polyamid, besteht.

Um die Verankerung der Hülse 9 in dem Formkörper 10 zu gewährleisten, kann ihre Außenfläche eine entsprechend, beispielsweise wie aus Fig. 4 hervorgeht, mehreckig gestaltete Oberfläche haben, dabei sind selbstverständlich auch andere Möglichkeiten gegeben z. B. eine Rillung oder Riffelung der Außenoberfläche der Hülse 9.

Die Fig. 2 zeigt auch eine andere Formgebung des elastischen Federelementes 11, das aber, wie bei Fig. 1 beschrieben, aus einem thermoelastischen Polymer bestehen kann.

Gemäß Fig. 3 besteht die Ummantelung 12 aus einem temperaturresistenten Kunststoff, z. B. einem Polyamid, in den Hartstoffpartikel 13 mit mindestens 40 Volumenprozent eingebettet und in gleicher Weise wirksam sind, wie bei der Legierung gemäß Fig. 1, wobei dieser Spike jedoch wegen des Wegfalles der als Bindemittel dienenden weichen Metalle leichter ist als der gemäß Fig. 1, wodurch die dynamische Kraft vermindert wird.

Das elastische Federelement 14, das materialmäßig dem nach den Fig. 1 und 2 entspricht, ist hier in einer weiteren abgewandelten Formgebung dargestellt.

Um eine Selbstreinigungsmöglichkeit zur Entfernung von in den funktionsmäßig unvermeidbaren Spalt zwischen Hartmetallstift und Zentralloch eingedrungenem abrasivem Schmutz und von Feuchtigkeit zu schaffen, kann, wie in Fig. 5 gezeigt, das Zentralloch 3 eine in Längsrichtung verlaufende Profilierung seiner Wandung aufweisen, durch die Schmutzkanäle geschaffen werden, durch welche eingedrungener Schmutz und eingedrungene Nässe durch die Bewegung des Hartmetallstiftes und die Zentrifugalkraft aus dem Zentralloch entfernt werden.

Eine andere Möglichkeit, die Ausweitung des Zentralloches unter Einsatz von Hartstoffen zu verhindern, ohne daß hierdurch eine erheblich größere Verschleißfestigkeit der Ummantelung gegenüber dem Profilgummi mit der Gefahr einer Straßenbeschädigung durch die Ummantelung gekoppelt wäre, besteht darin, die Ummantelung 1 der Fig. 1 aus Stahl herzustellen und nur die Oberfläche des Zentralloches mit Hartstoff zu beschichten, wofür die in der Technik bekannten Carbide, Nitride, Boride und Oxyde, wie z. B. TiC, TiN, TiB$_2$ oder Al$_2$O$_2$ in Frage kommen.

In diesem Falle bildet also nur das hartstoffbeschichtete Zentralloch 3 die verschleißfeste Führung für den Hartmetallstift, wobei die Dicke der Beschichtung so gering ist, daß sie der Abnutzung der Ummantelung folgt, andererseits aber eine Ausweitung des Lochs durch die gleitende Reibung des Hartmetallstiftes erfolgreich verhindert.

Eine noch größere Verschleißminderung läßt sich dadurch erreichen, daß auch die Oberfläche des Hartmetallstiftes eine Hartstoffbeschichtung aufweist.

Bezugszeichenaufstellung

1   Ummantelung
2   Hartmetallstift
3   Zentralloch
4   Lauffläche des Reifens
5   Stirnfläche des Spikes
6   Flansch an 2
7   zylindrische Ausnehmung in 1
8   elastisches Federelement
9   Hülse
10  Formkörper
11  elastisches Federelement
12  Ummantelung
13  Hartstoffpartikel
14  elastisches Federelement
15  in Längsrichtung verlaufende Profilierung von 3

**Patentansprüche**

1. Spike für Kraftfahrzeugreifen mit einem Hartmetallstift (2), der in einem Zentralloch (3) einer Ummantelung (1) gegen die Wirkung eines elastischen Federelements (8, 11) axial verschiebbar ist, wobei der Hartmetallstift und die Ummantelung aus unterschiedlichem Material bestehen und die Ummantelung im Zentralloch eine Führung (9) aufweist, dadurch gekennzeichnet, daß die Führung (9) für den Hartmetallstift (2) aus einer Legierung mit hohem Gehalt eines Hartstoffcarbids, z. B. Titancarbid, mit großer Verschleißfestigkeit gegenüber gleitender Reibung, aber geringer Widerstandsfestigkeit gegenüber schlagender Beanspruchung besteht.

2. Spike nach Anspruch 1, dadurch gekennzeichnet, daß die gesamte Ummantelung (1) aus der Legierung besteht.

3. Spike nach Anspruch 1, dadurch gekennzeichnet, daß die Führung aus einer Hülse (9) aus der Legierung besteht, die in einem die Ummantelung vervollständigenden Formkörper (10) aus wenig verschleißfestem Material, z. B. Kunststoff, eingesetzt ist.

4. Spike nach Anspruch 3, dadurch gekennzeichnet, daß die Außenfläche der Hülse (9) eine die Verankerung im Formkörper (10) gewährleistende, z. B. mehreckige Oberfläche hat.

5. Spike nach Anspruch 1, gekennzeichnet durch eine Hartstoffbeschichtung der Oberfläche des Zentralloches (3).

6. Spike nach Anspruch 1, dadurch gekennzeichnet, daß das Zentralloch (3) innen eine in Längsrichtung verlaufende Profilierung (15) aufweist.

7. Spike für Kraftfahrzeugreifen mit einem Hartmetallstift (2), der in einem Zentralloch (3) einer Ummantelung (12) gegen die Wirkung eines elastischen Federelementes (14) axial verschiebbar ist, wobei die Ummantelung (12) aus einem weichen Trägerwerkstoff besteht, dadurch gekennzeichnet, daß Hartstoffpartikel (13) in den Trägerwerkstoff eingelagert sind.

8. Spike nach Anspruch 1 oder 7, dadurch gekennzeichnet, daß das Federelement (8, 11, 14) aus einem thermoelastischen Polymer besteht.

9. Spike nach Anspruch 1 oder 7, gekennzeichnet durch eine Hartstoffbeschichtung des Hartmetallstiftes (2).

**Claims**

1. Spike for motor vehicle tyres having a hard metal pin (2) which is axially movable in a central hole (3) in a jacket (1) in opposition to the action of an elastic spring element (8, 11), the hard metal pin and the jacket consisting of different materials and the jacket having a guide (9) in the central hole, characterised in that the guide (9) for the hard metal pin (2) consists of an alloy with a high content of a hard material carbide, for example titanium carbide, with great wear resistance to sliding friction, but low resistance to impact stress.

2. Spike according to claim 1, characterised in that the entire jacket (1) consists of the alloy.

3. Spike according to claim 1, characterised in that the guide consists of a sleeve (9) composed of the alloy which is inserted in a moulded body (10) of material of little wear resistance, for example plastic, which completes the jacket.

4. Spike according to claim 3, characterised in that the outer surface of the sleeve (9) is a surface ensuring anchoring in the moulded body (10), for example a polygonal surface.

5. Spike according to claim 1, characterised by a hard material coating on the surface of the central hole (3).

6. Spike according to claim 1, characterised in that the central hole (3) has a profiling (15) extending in the longitudinal direction.

7. Spike for motor vehicle tyres having a hard metal pin (2) which is axially movable in a central hole (3) in a jacket (12) in opposition to the action of an elastic spring element (14), the jacket (12) consisting of a soft carrier material, characterised in that hard material particles (13) are embedded in the carrier material.

8. Spike according to claim 1 or 7, characterised in that the spring element (8, 11, 14) consists of a thermoelastic polymer.

9. Spike according to claim 1 or 7, characterised by a hard material coating on the hard metal pin (2).

**Revendications**

1. Clou pour pneumatiques de véhicules automobiles, comportant une tige en métal dur (2) agencée dans un trou central (3) d'une enveloppe (1) pour coulisser axialement contre l'action d'un élément élastique (8, 11), cette tige en métal dur et l'enveloppe étant faites de matières différentes, et l'enveloppe présentant un guide (9) dans le trou central, caractérisé en ce que le guide (9) pour la tige en métal dur (2) est en alliage à forte teneur d'un carbure de matière dure, par exemple le carbure de titane, ayant une grande résistance à l'usure par frottement de glissement et une faible résistance aux sollicitations dues à des chocs.

2. Clou selon la revendication 1, caractérisé en ce que l'enveloppe (1) est, dans son ensemble, dudit alliage.

3. Clou selon la revendication 1, caractérisé en ce que le guide est constitué par une douille (9) faite dudit alliage, laquelle est insérée dans un corps moulé (10) qui complète l'enveloppe et qui est en une matière peu résistante à l'usure, par exemple en matière plastique.

4. Clou selon la revendication 3, caractérisé en ce que la surface extérieure de la douille (9) possède une surface, par exemple polygonale, assurant l'ancrage dans le corps moulé (10).

5. Clou selon la revendication 1, caractérisé par un revêtement en matière dure de la surface du trou central (3).

6. Clou selon la revendication 1, caractérisé en ce que le trou central (3) présente intérieurement un profilage (15) dirigé longitudinalement.

7. Clou pour pneumatiques de véhicules automobiles, comportant une tige en métal dur (2) agencée dans un trou central (3) d'une enveloppe (12) de manière à pouvoir coulisser axialement contre l'action d'un élément élastique (14), cette enveloppe (12) étant faite d'une matière-support souple, caractérisé en ce que des particules de matière·dure (13) sont noyées dans cette matière-support.

8. Clou selon la revendication 1 ou 7, caractérisé en ce que l'élément élastique (8, 11, 14) est en un polymère thermoélastique.

9. Clou selon la revendication 1 ou 7, caractérisé par un revêtement en matière dure de la tige en métal dur (2).

FIG. 1

FIG. 2

FIG. 3

FIG. 4

FIG. 5